# FASCICULE DE BREVET EUROPEEN

(11) **EP 3 147 490 B1**
(45) Date de publication et mention de la délivrance du brevet: **01.05.2019**
(21) Numéro de dépôt: 16190235.8
(22) Date de dépôt: 22.09.2016
(51) Int. Cl.: F02K 9/52, F02K 9/60, F02K 9/95

(54) **SYSTÈME DE PROPULSION D'UNE FUSÉE**
ANTRIEBSSYSTEM EINER RAKETE
PROPULSION SYSTEM OF A ROCKET

(30) Priorité: 22.09.2015 FR 1558924
(43) Date de publication de la demande: 29.03.2017
(73) Titulaire: CENTRE NATIONAL D'ETUDES SPATIALES, 75001 Paris (FR)
(72) Inventeur: THERON, Marie, 92140 Clamart (FR); HERPE, Julien, 78000 Versailles (FR); JUES, Thomase, 93100 Montreuil (FR); FORTUNIER, Pascal, 91890 Videlles (FR)
(74) Mandataire: Gaillarde, Frédéric F. Ch.

(56) Documents cités:
- EP-A2- 1 998 036
- US-A- 4 621 492
- US-A1- 2009 173 321

## Description

### DOMAINE TECHNIQUE GENERAL

L'invention concerne les systèmes d'allumage et d'alimentation d'une chambre de combustion d'un moteur à ergol liquide d'une fusée.

### ETAT DE LA TECHNIQUE

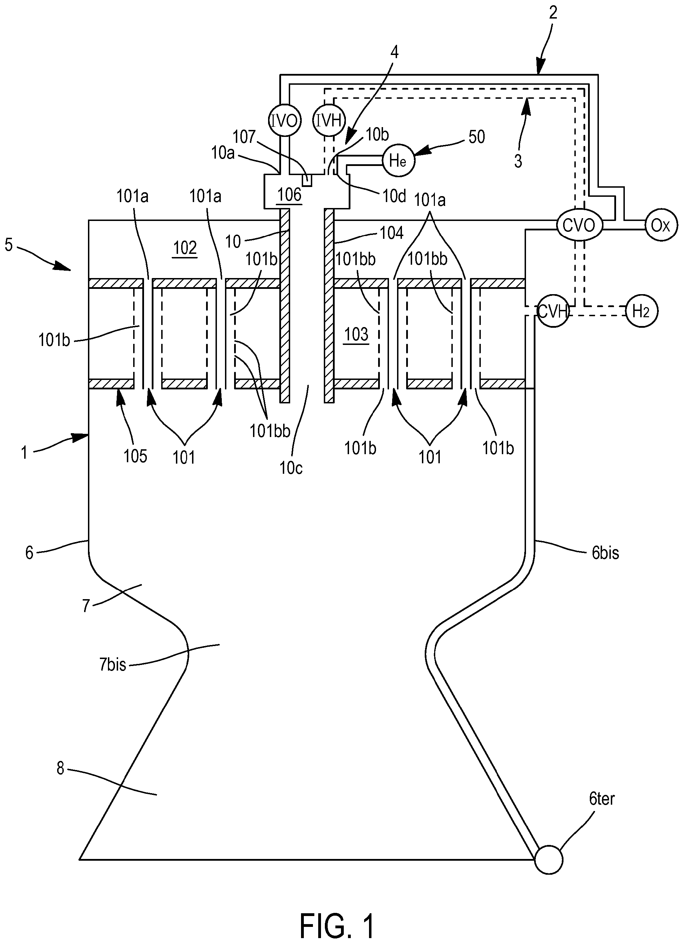

La **figure 1** illustre schématiquement un système de propulsion d'une fusée comprenant une chambre de combustion 1, un système 2 d'alimentation en comburant (de l'Oxygène par exemple), un système 3 d'alimentation en combustible (de l'Hydrogène par exemple) et un système d'allumage 4.

La chambre 1 de combustion comprend depuis sa partie supérieure jusqu'à sa partie inférieure, une tête d'injection 5, un corps de chambre 6 de combustion (là où la combustion en tant que telle a lieu) refroidi par un circuit de refroidissement 6bis alimenté par un tore d'alimentation 6ter, une partie 7 convergente, un col 7bis et une partie divergente 8.

La tête d'injection 5 qui surmonte le corps de chambre 6 est constituée de plusieurs injecteurs 101, d'un tore d'alimentation en comburant 102, d'un tore d'alimentation en combustible 103, d'un orifice 104 par lequel on insère un système d'allumage 4, et d'une plaque d'injection 105 perforée supportant les injecteurs 101 et assurant une barrière physique entre le corps 6 de chambre et les tores d'alimentation en comburant 102 et en combustible103.

Chaque injecteur (quatre sont représentés sur la figure 1 mais ce nombre n'est pas limitatif) comprend un canal d'injection 101a du comburant et un canal d'injection 101b du combustible coaxial avec le canal d'injection 101a du comburant.

Le comburant et le combustible sont amenés depuis les systèmes d'alimentations en comburant 2 et en combustible 3 aux injecteurs 101, via les tores d'alimentation 102, 103.

Le canal d'injection 101a du comburant est en communication avec le tore d'alimentation en comburant 102 et débouche vers la chambre de combustion 6. En particulier, ce canal d'injection 101a du comburant débouche vers la chambre de combustion 6 depuis le tore d'alimentation en comburant 102.

Le canal d'injection 101b du combustible communique avec le tore d'alimentation en combustible 103 par l'intermédiaire d'orifice(s) 101bb. Le canal d'injection 101b du combustible ne communique pas avec le canal d'injection 101a du comburant ni avec le tore d'alimentation en comburant 102.

Les injecteurs 101 sont fixés à la plaque d'injection 105. La structure des injecteurs 101 et donc leurs caractéristiques fonctionnelles sont conditionnées par la performance de la chambre. Les débits d'alimentation comburant et combustible sont configurés pour un domaine de fonctionnement donné de la chambre de combustion. Le combustible et le comburant sont amenés séparément dans les injecteurs 101, dont leur structure a été choisie pour permettre le meilleur mélange possible des deux ergols en sortie des injecteurs, de manière à permettre leur combustion la plus stable et homogène possible dans la chambre de combustion.

Le système d'alimentation en comburant est configuré pour amener le comburant dans les injecteurs 101 et le système d'allumage 4. Une première vanne IVO d'alimentation en comburant et une seconde vanne CVO d'alimentation en comburant permettent de piloter l'alimentation en comburant respectivement vers le système d'allumage 4 et le tore d'alimentation en comburant 102.

Le système d'alimentation en combustible est configuré pour amener le combustible dans le tore d'alimentation 103, dans le circuit de refroidissement 6bis et son tore d'alimentation 6ter et dans le système d'allumage 4. Une première vanne IVH d'alimentation en combustible et une seconde vanne CVH d'alimentation en combustible permettent de piloter l'alimentation en combustible respectivement vers le système d'allumage 4 et le tore d'alimentation en combustible 103 via le circuit de refroidissement 6bis et son tore d'alimentation 6ter.

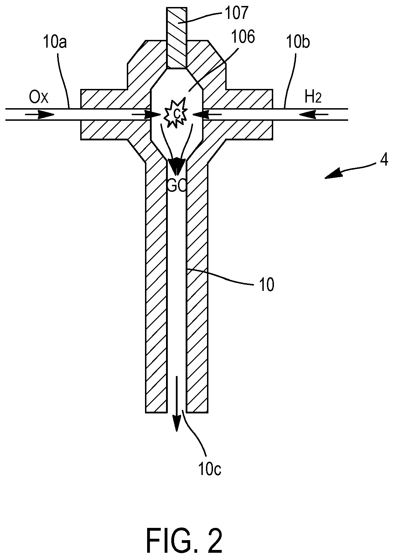

En relation également, avec la **figure 2** illustrant une vue détaillée du système d'allumage, le système d'allumage 4 comprend une chambre de combustion allumeur 106, une bougie 107 pour allumer le mélange comburant et combustible (venant des lignes d'alimentation situées après la première vanne d'alimentation en comburant IVO et après la première vanne d'alimentation en combustible IVH respectivement), un canal allumeur 10 est inséré dans l'orifice 104 de la tête d'injection 5 et débouche dans la chambre de combustion 6. Le système d'allumage est distinct de la tête d'injection 5. La tête d'injection est donc autour du canal allumeur 10.

Le canal allumeur 10 comprend une première et une seconde séries d'orifice(s) 10a, 10b par lesquels sont respectivement amenés le comburant et le combustible selon un débit d'allumage au cours d'une phase d'allumage qui sera décrite ci-après (le débit d'allumage est inférieur au débit d'injection de chaque injecteur de 5 à 20 fois inférieur par exemple). Le canal allumeur 10 comprend également un troisième orifice principal 10c débouchant dans la chambre 6 de combustion ainsi qu'une bougie 107disposée dans la chambre de combustion allumeur 106 de manière à permettre l'inflammation du mélange combustible et comburant issu des première et une seconde séries d'orifice(s) 10a, 10b.

En fonctionnement, une telle chambre de combustion comprend une phase d'allumage au cours de laquelle seul le système d'allumage est opérationnel puis une phase d'injection transitoire ou cours de laquelle les injecteurs démarrent l'injection, le système d'allumage étant opérationnel puis une phase d'injection stabilisée ou seuls les injecteurs sont opérationnels, le système d'allumage étant en phase d'arrêt. On constate que la phase d'injection comprend une partie transitoire et une partie stabilisée.

La phase d'allumage consiste à ouvrir des première vannes d'alimentation en comburant IVO et combustible IVH et activer la bougie 107 pour permettre la génération de gaz chauds par la combustion dans le système d'allumage 4 ; ces gaz chauds GC sont ensuite éjectés dans la chambre de combustion principale par l'orifice de sortie de l'allumeur 10c (via le canal allumeur 10) ; l'ordre d'ouverture des premières vannes d'alimentation en comburant IVO et combustible IVH dépend de la structure fonctionnelle du système d'allumage 4 et de la séquence de démarrage retenue pour le moteur complet utilisant cette chambre de combustion.

La phase d'injection transitoire consiste à ouvrir des secondes vannes d'alimentation en comburant CVO et combustible CVH (de même, l'ordre d'ouverture de ces deux vannes dépend du design fonctionnel des injecteurs, de l'allumeur et de la séquence de démarrage retenue pour le moteur complet) ; le mélange d'ergols combustible et comburant en sortie des injecteurs est alors allumé par les gaz chauds issus du système d'allumage 4 et après une durée de l'ordre de la seconde (typiquement 1s), la combustion est établie dans la chambre de combustion, les premières vannes d'alimentation en comburant et combustible IVO, IVH sont fermées.

La combustion établie la phase d'injection stabilisée démarre, les secondes vannes d'alimentation en comburant CVO et combustible CVH étant pleinement ouvertes.

Lors de cette phase d'injection stabilisée, des gaz chauds provenant de la chambre de combustion peuvent donc remonter dans le canal allumeur 10. La composition de ces gaz chauds peut inclure de l'eau en phase gazeuse, qui peut geler lors des phases d'arrêt du moteur puis d'attente avant le rallumage suivant, et donc venir obturer le ou les orifice(s) d'entrée des ergols dans le canal d'allumage, rendant impossible le rallumage du moteur. Il est donc nécessaire de faire en sorte que des gaz chauds ne puissent par remonter dans le canal d'allumage ou s'ils remontent, de les purger avant la fin de la phase d'arrêt. Pour ce faire, on peut faire circuler un gaz de balayage neutre tel que de l'Hélium ou un des deux ergols combustible ou comburant, pendant la phase stabilisée et la phase d'arrêt ou seulement pendant la phase d'arrêt. Ce gaz de balayage est amené dans le canal d'allumage par un orifice spécifique 10d d'alimentation du canal d'allumage (ou par un des orifices existants), via un système 50 d'alimentation en gaz neutre ou via une alimentation en combustible ou comburant directement dérivée des alimentations existantes sur le moteur (voir la figure 1).

En conséquence, le système d'allumage ne fonctionne que pendant les premières secondes de fonctionnement du moteur. Son encombrement est au moins équivalent à celui d'un injecteur sur la plaque d'injection. La zone de sortie du canal allumeur côté aval de la plaque d'injection est le siège d'une zone morte de recirculation, qui ne participe pas à la combustion et donc à la performance globale de la chambre.

L'impact sur la performance est d'autant plus important que la chambre est de petite taille. De plus, pour des raisons de sécurité, il est nécessaire de balayer le canal d'allumage pour éviter la remontée de gaz chauds dans l'allumeur et leur givrage ou pour les purger le cas échéant avant les rallumages suivants. Le balayage par un gaz neutre tel que l'Hélium nécessite d'embarquer des réserves supplémentaires en ergols neutres qui viennent impacter la performance du lanceur (masse supplémentaire à emporter ne contribuant pas directement à la production de poussée par le moteur). De même, le combustible ou le comburant utilisé comme gaz de balayage ne contribue que marginalement à la combustion dans la chambre et donc à sa performance globale. Supprimer toute consommation inutile de gaz de balayage est bénéfique pour le rendement global du moteur de fusée. Les documents US4621492 et EP1998036 décrivent des systèmes de propulsion avec injecteurs.

### PRESENTATION DE L'INVENTION

Un objectif de l'invention est d'utiliser un système d'allumage d'une chambre de combustion même au cours d'une phase d'injection stabilisée.

A cet effet, l'invention propose un système de propulsion d'une fusée comprenant : un système d'alimentation en comburant ; un système d'alimentation en combustible ; une chambre de combustion ; une pluralité d'injecteurs ; un système d'allumage ;
les injecteurs et le système d'allumage étant en communication avec le système d'alimentation en comburant et le système d'alimentation en combustible et débouchant dans la chambre de combustion, les injecteurs (étant configurés pour, au cours d'une phase d'injection, amener du comburant et du combustible vers la chambre de combustion;
le système d'allumage étant configuré pour, au cours d'une phase d'allumage, amener des gaz chauds vers la chambre de combustion et pour, au cours de la phase d'injection, amener du comburant et du combustible vers la chambre de combustion de manière à ce que le débit de comburant et de combustible issu du système d'allumage soit homogène avec celui issu des injecteurs.

L'invention est avantageusement complétée par les caractéristiques suivantes, prises seules ou en une quelconque de leur combinaison techniquement possible.

Le système comprend en outre une tête d'injection surmontant la chambre de combustion ; la tête d'injection étant en communication avec le système d'alimentation en comburant et le système d'alimentation en combustible, le système d'allumage étant entièrement intégré à la tête d'injection.

Le système d'allumage et la tête d'injection sont formés d'une seule pièce, typiquement obtenue par fabrication additive.

Le système d'allumage comprend : un canal principal d'allumage en communication avec le système d'alimentation en comburant et le système d'alimentation en combustible ; un canal secondaire d'allumage entourant le canal principal d'allumage et en communication avec le tore d'alimentation en comburant par l'intermédiaire d'orifice(s) pour amener du comburant vers la chambre de combustion ; un canal tertiaire d'allumage entourant le canal secondaire d'allumage et en communication avec le tore d'alimentation en combustible par l'intermédiaire d'orifice(s) pour amener du combustible vers la chambre de combustion.

Le système d'allumage est configuré pour, au cours de la phase d'injection, balayer des gaz chauds avec le comburant.

Les systèmes d'alimentation en comburant et combustible comprennent des premières vannes d'alimentation en comburant et en combustible, les premières vannes d'alimentation permettant de piloter l'alimentation du système d'allumage en comburant et en combustible et les secondes vannes d'alimentation permettant de piloter l'alimentation du système d'allumage et de la tête d'injection en comburant et en combustible.

La tête d'injection comprend des injecteurs, un tore d'alimentation en comburant et un tore d'alimentation en combustible, chaque injecteur comprenant un canal d'injection du comburant débouchant vers la chambre de combustion depuis le tore d'alimentation en comburant pour amener du comburant vers la chambre de combustion et d'un canal d'injection du combustible coaxial au canal d'injection du comburant, le canal d'injection du combustible communiquant avec le tore d'alimentation en combustible par l'intermédiaire d'orifice(s) permettant d'amener le combustible aves la chambre de combustion.

L'invention concerne également un moteur de fusée comprenant un système de propulsion selon l'invention.

Les avantages de l'invention sont multiples.

L'utilisation du système d'allumage au cours de la phase stabilisée permet d'améliorer le rendement de la combustion car comparativement à une chambre de combustion dans laquelle ce dernier ne sert qu'au cours de la phase d'allumage des quantités de comburant et de combustible supplémentaires sont amenées et participent à la performance de la chambre en phase stabilisée.

En outre, compte tenu que le système d'allumage est fonctionnel au cours de la phase d'injection, il permet d'éviter la remontée des gaz chauds dans le canal allumeur principal depuis la chambre de combustion.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels outre les figures 1 et 2 déjà discutées :
- la figure 3 illustre une partie d'un système de propulsion selon un mode de réalisation ;
- la figure 4 illustre une vue de dessous d'un système d'allumage du système de propulsion de la figure 3 ;
- les figures 5 à 7 illustrent différentes phases du fonctionnement d'un système de propulsion selon un mode de réalisation.

Sur l'ensemble des figures les éléments similaires portent des références identiques.

### DESCRIPTION DETAILLEE DE L'INVENTION

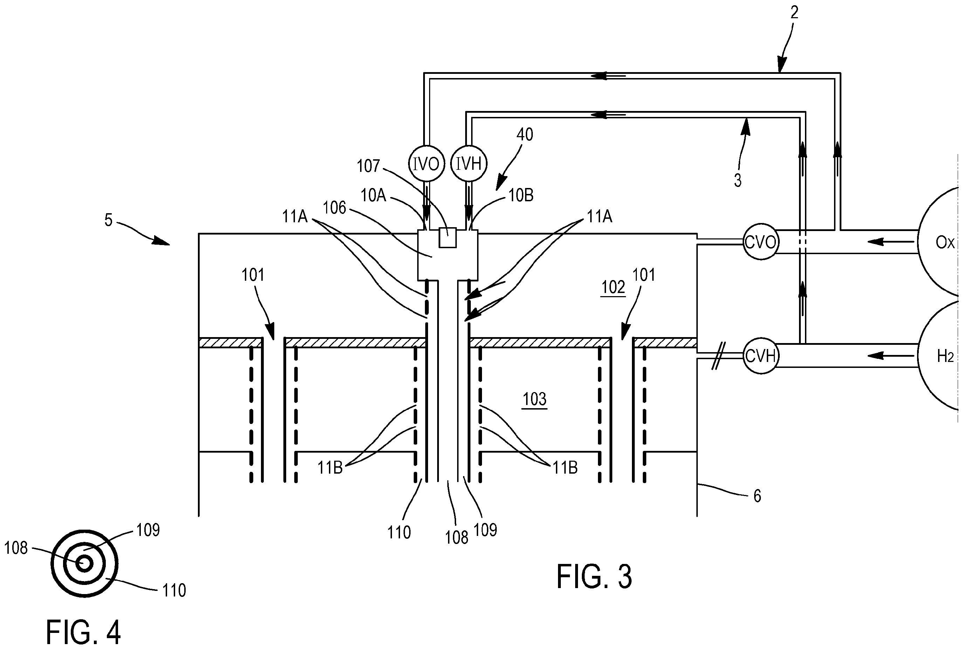

La **figure 3** illustre schématiquement une partie d'un système de propulsion d'une fusée selon un mode de réalisation de l'invention comprenant une chambre de propulsion 1, un système 2 d'alimentation en comburant (de l'Oxygène par exemple), un système 3 d'alimentation en combustible (de l'Hydrogène par exemple) et un système d'allumage 40.

Le système de propulsion de l'invention diffère de celui de type connu illustré sur les figures 1 et 2 par la structure du système d'allumage 40 et en ce qu'il est entièrement intégré et connecté à la tête d'injection 5.

Le système d'allumage 40 et la tête d'injection sont de préférences formés d'une seule pièce obtenue par fabrication additive par exemple.

Le système d'allumage 40 comprend une bougie 107, une chambre de combustion allumeur 106, un canal allumeur principal 108 débouchant de la chambre allumeur 106 vers la chambre de combustion 6, un canal allumeur secondaire 109 coaxial avec le canal allumeur principal 108 et un canal allumeur tertiaire 110 coaxial avec le canal allumeur secondaire 109.

Le canal allumeur principal 108 permet d'amener des gaz chauds vers la chambre 6 de combustion au cours de la phase d'allumage (il est équivalent au canal allumeur 10 de la figure 1).

Le canal allumeur secondaire 109 ne communique pas avec le canal allumeur principal 108 mais communique directement avec le tore d'alimentation en comburant 102 par l'intermédiaire d'un orifice ou une série d'orifices 11a pratiqués dans ce dernier. Le canal allumeur secondaire 109 ne communique toutefois pas avec le tore d'alimentation en combustible 103 ni avec le canal allumeur tertiaire 110 mais débouche dans la chambre de combustion 6.

Ainsi, le canal allumeur secondaire 109 permet d'amener vers la chambre de combustion 6 du comburant à partir du tore d'alimentation en comburant 102.

Le canal allumeur tertiaire 110 ne communique pas avec le canal allumeur principal 108 mais communique directement avec le tore d'alimentation en combustible 103 par l'intermédiaire d'un orifice ou une série d'orifices 11b pratiqués dans le canal tertiaire 110. Le canal allumeur tertiaire 110 ne communique toutefois pas avec le tore d'alimentation en comburant 102 ni avec le canal allumeur secondaire 109 mais débouche dans la chambre de combustion 6.

Ainsi, le canal allumeur tertiaire 110 permet d'amener vers la chambre de combustion 6 du combustible à partir du tore d'alimentation en combustible 103.

Comme cela est également visible sur la **figure 4****,** le canal principal, le canal secondaire et le canal tertiaire sont concentriques. Le canal principal est au centre, le canal secondaire est en position intermédiaire et le canal tertiaire est à l'extérieur.

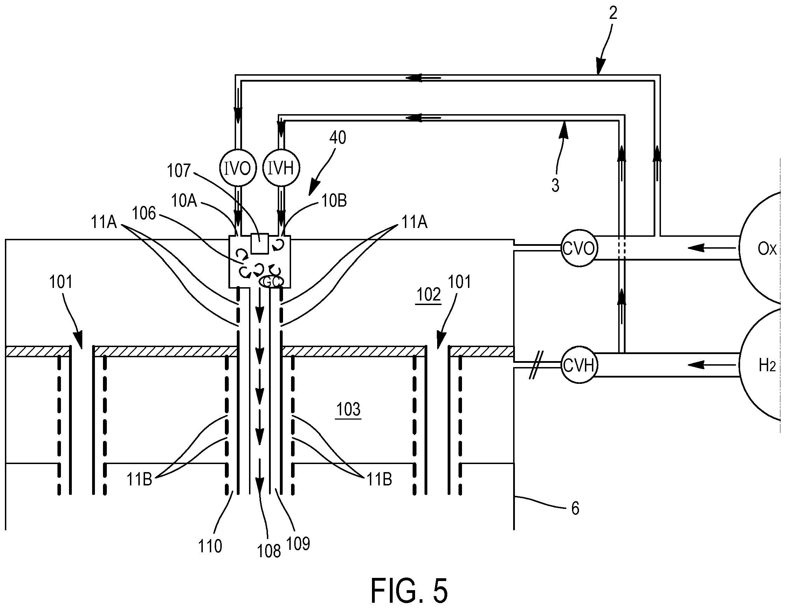

On décrit maintenant un fonctionnement du système de propulsion décrit en relation avec les **figures 5****,** **6** **et** **7****.**

Au cours d'une phase d'allumage (voir la figure 5), les premières vannes d'alimentation en comburant et combustible IVO, IVH sont ouvertes et les secondes vannes d'alimentation en comburant et combustible CVO, CVH sont fermées. Il y a dans ce cas une combustion et une éjection des gaz chauds GC issus du canal allumeur principal 108 vers la chambre de combustion 6.

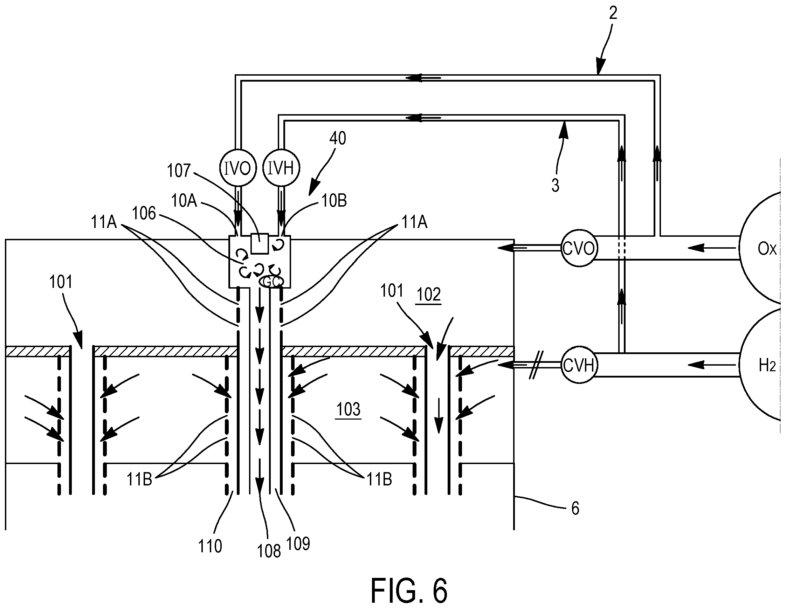

Au cours d'une phase transitoire d'injection, (voir la figure 6), les secondes vannes d'alimentation en comburant et combustible CVO, CVH sont ouvertes (les autres étant toujours ouvertes), de sorte à ce que le canal allumeur secondaire 109 soit alimenté en comburant par le tore d'alimentation en comburant 102 via les orifices 11a.

En outre, le canal allumeur tertiaire 110 est alimenté en combustible par l'intermédiaire du tore d'alimentation en combustible 103 via les orifices 11b.

Des gaz chauds vont alors être éjectés par le canal allumeur principal 108, le comburant est éjecté dans la chambre de combustion 6 par le canal allumeur secondaire 109 et le combustible est éjecté dans la chambre de combustion 6 par le canal allumeur tertiaire 110.

Les gaz chauds issus du canal allumeur principal vont réagir avec le comburant et le combustible issus des canaux allumeurs secondaire et tertiaire 109, 110 dans la chambre de combustion 6.

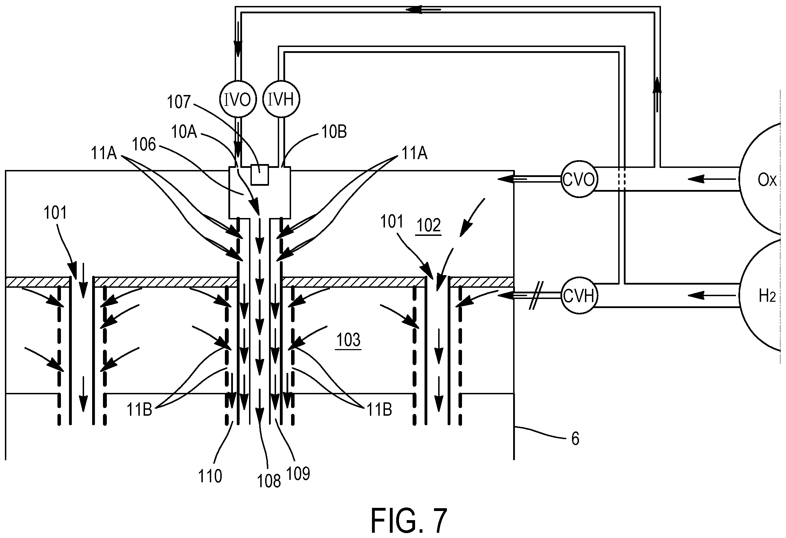

Au cours d'une phase d'injection stabilisée (voir la figure 7), la première vanne d'alimentation en combustible IVH est fermée, et les autres vannes sont ouvertes. Le comburant venant de la première vanne d'alimentation en comburant IVO s'écoule le long du canal allumeur principal 108 et est éjecté dans la chambre de combustion 6. Le jet de comburant issu du canal allumeur secondaire 109 est injecté coaxialement, ainsi que le jet de combustible issu du canal allumeur tertiaire 110.

Ainsi, au cours de la phase d'injection stabilisée, un jet de comburant provenant de deux sources (canaux principal et secondaire) entouré par un jet de combustible provenant du canal allumeur tertiaire sont donc injectés dans la chambre de combustion 6 de même que les injecteurs 101 amènent le combustible et le comburant dans la chambre de combustion 6.

La structure de l'écoulement est assimilable à la structure de l'écoulement issu d'un injecteur coaxial. Le mélange issu de l'allumeur-injecteur est allumé soit par interactions avec les jets réactifs issus des injecteurs périphériques (allumés lors de la phase précédente), soit à partir de l'allumage du mélange issu des canaux 109 et 110 par les gaz chauds issus du canal 108 lors de la phase précédente, et participe donc à la combustion dans la chambre.

Ainsi, le système d'allumage 40 contribue à l'injection du comburant et du combustible selon un débit d'injection supérieur au débit d'allumage. En d'autres termes, au cours de la phase d'injection, le débit d'allumage (issu du système d'allumage 40) est complété avec un complément de comburant pour qu'au cours de la phase d'injection, le débit de comburant et de combustible issu du système d'allumage 40 soit homogène avec celui issu des injecteurs 101. Le système d'allumage est dans ce cas capable d'amener vers la chambre 6 de combustion du comburant et du combustible selon un débit d'injection supérieur au débit d'allumage.

Selon ce mode de réalisation, le balayage pendant la phase d'injection est assuré par la circulation de comburant dans le canal principal d'allumage ; il n'est plus nécessaire de prévoir qu'un gaz neutre circule dans le système d'allumage, ce qui évite d'avoir à installer un système d'alimentation en gaz neutre, et le gaz de balayage utilisé contribue directement à la combustion dans la chambre principale, ce qui permet d'augmenter l'efficacité de combustion.

## Revendications

1. Système de propulsion d'une fusée comprenant : un système (2) d'alimentation en comburant ; un système (3) d'alimentation en combustible ; une chambre (6) de combustion ; une pluralité d'injecteurs (101) ; un système d'allumage (40) ;
les injecteurs (101) et le système d'allumage (40) étant en communication avec le système d'alimentation en comburant et le système d'alimentation en combustible et débouchant dans la chambre de combustion (6), les injecteurs (101) étant configurés pour, au cours d'une phase d'injection, amener du comburant et du combustible vers la chambre (6) de combustion;
le système de propulsion étant **caractérisé en ce que** le système d'allumage (40) est configuré pour, au cours d'une phase d'allumage, amener des gaz chauds vers la chambre (6) de combustion et pour, au cours de la phase d'injection, amener du comburant et du combustible vers la chambre (6) de combustion de manière à ce que le débit de comburant et de combustible issu du système d'allumage (40) soit homogène avec celui issu des injecteurs (101).

2. Système de propulsion selon la revendication 1, comprenant en outre une tête d'injection (5) surmontant la chambre de combustion (6) ; la tête d'injection (5) étant en communication avec le système d'alimentation en comburant et le système d'alimentation en combustible, le système d'allumage (40) étant entièrement intégré à la tête d'injection (5).

3. Système de propulsion selon la revendication 2, dans lequel le système d'allumage (40) et la tête d'injection (5) sont formés d'une seule pièce, typiquement obtenue par fabrication additive.

4. Système de propulsion selon l'une des revendications précédentes, dans lequel le système d'allumage comprend
un canal principal d'allumage (108) en communication avec le système d'alimentation en comburant et le système d'alimentation en combustible ;
un canal secondaire d'allumage (109) entourant le canal principal d'allumage (108) et en communication avec le tore d'alimentation en comburant (102) par l'intermédiaire d'orifice(s) (11a) pour amener du comburant vers la chambre de combustion ;
un canal tertiaire d'allumage (110) entourant le canal secondaire d'allumage (109) et en communication avec le tore d'alimentation en combustible (103) par l'intermédiaire d'orifice(s) (11b) pour amener du combustible vers la chambre (6) de combustion.

5. Système de propulsion selon l'une des revendications précédentes, dans lequel le système d'allumage est configuré pour, au cours de la phase d'injection, balayer des gaz chauds avec le comburant.

6. Système de propulsion selon l'une des revendications précédentes, dans lequel les systèmes (2) d'alimentation en comburant et combustible (3) comprennent des premières vannes d'alimentation en comburant et en combustible (IVH, IVO), les premières vannes d'alimentation permettant de piloter l'alimentation du système d'allumage (40) en comburant et en combustible et les secondes vannes d'alimentation permettant de piloter l'alimentation du système d'allumage (40) et de la tête d'injection (5) en comburant et en combustible.

7. Système de propulsion selon la revendication 1, dans lequel la tête d'injection (5) comprend des injecteurs (101), un tore d'alimentation en comburant (102) et un tore d'alimentation en combustible (103), chaque injecteur comprenant un canal d'injection du comburant (101a) débouchant vers la chambre de combustion (6) depuis le tore d'alimentation en comburant (102) pour amener du comburant vers la chambre de combustion (6) et d'un canal d'injection du combustible (101b) coaxial au canal d'injection du comburant, le canal d'injection du combustible communiquant avec le tore d'alimentation en combustible (103) par l'intermédiaire d'orifice(s) (101bb) permettant d'amener le combustible vers la chambre (6) de combustion.

8. Moteur de fusée comprenant un système de propulsion selon l'une des revendications précédentes.

## Patentansprüche

1. Antriebssystem einer Rakete, umfassend: ein System (2) zur Versorgung mit Verbrennungsmittel; ein System (3) zur Versorgung mit Brennstoff; eine Brennkammer (6); eine Vielzahl von Injektoren (101); ein Zündsystem (40);
wobei die Injektoren (101) und das Zündsystem (40) mit dem System zur Versorgung mit Verbrennungsmittel und dem System zur Versorgung mit Brennstoff in Kommunikation sind und in die Brennkammer (6) ausmünden, wobei die Injektoren (101) konfiguriert sind, um während einer Injektionsphase, Verbrennungsmittel und Brennstoff zu der Brennkammer (6) zu führen;
wobei das Antriebssystem **dadurch gekennzeichnet ist, dass** das Zündsystem (40) konfiguriert ist, um während einer Zündphase warme Gase zu der Brennkammer (6) zu führen und um während der Injektionsphase Verbrennungsmittel und Brennstoff zu der Brennkammer (6) zu führen, so dass der Durchsatz von Verbrennungsmittel und von Brennstoff aus dem Zündsystem (40) mit dem aus den Injektoren (101) homogen ist.

2. Antriebssystem nach Anspruch 1, umfassend ferner einen Injektionskopf (5), welcher die Brennkammer (6) überragt; wobei der Injektionskopf (5) mit dem System zur Versorgung mit Verbrennungsmittel und dem System zur Versorgung mit Brennstoff in Kommunikation ist, wobei das Zündsystem (40) vollständig in den Injektionskopf (5) integriert ist.

3. Antriebssystem nach Anspruch 2, wobei das Zündsystem (40) und der Injektionskopf (5) aus einem einzigen Teil gebildet sind, das in typischer Weise durch additive Fertigung erhalten wird.

4. Antriebssystem nach einem der vorangehenden Ansprüche, wobei das Zündsystem umfasst
einen Hauptzündkanal (108) in Kommunikation mit dem System zur Versorgung mit Verbrennungsmittel und dem System zur Versorgung mit Brennstoff;
einen sekundären Zündkanal (109), der den Hauptzündkanal (108) umgibt und in Kommunikation mit dem Torus zur Versorgung mit Verbrennungsmittel (102) über Öffnung(en) (11a) ist, um Verbrennungsmittel zu der Brennkammer zu führen;
einen tertiären Zündkanal (110), der den sekundären Zündkanal (109) umgibt und in Kommunikation mit dem Torus zur Versorgung mit Brennstoff (103) über Öffnung(en) (11b) ist, um Brennstoff zu der Brennkammer (6) zu führen.

5. Antriebssystem nach einem der vorangehenden Ansprüche, wobei das Zündsystem konfiguriert ist, um während der Injektionsphase warme Gase mit dem Verbrennungsmittel abzutasten.

6. Antriebssystem nach einem der vorangehenden Ansprüche, wobei die Systeme (2) zur Versorgung mit Verbrennungsmittel und Brennstoff (3) erste Ventile zur Versorgung mit Verbrennungsmittel und mit Brennstoff (IVH, IVO) umfassen, wobei die ersten Ventile zur Versorgung erlauben, die Versorgung des Zündsystems (40) mit Verbrennungsmittel und mit Brennstoff zu lenken und die zweiten Ventile zur Versorgung erlauben, die Versorgung des Zündsystems (40) und des Injektionskopfs (5) mit Verbrennungsmittel und mit Brennstoff zu lenken.

7. Antriebssystem nach Anspruch 1, wobei der Injektionskopf (5) Injektoren (101), einen Torus zur Versorgung mit Verbrennungsmittel (102) und einen Torus zur Versorgung mit Brennstoff (103) umfasst, wobei jeder Injektor einen Injektionskanal des Verbrennungsmittels (101a), der ab dem Torus zur Versorgung mit Verbrennungsmittel (102) zu der Brennkammer (6) ausmündet, um Verbrennungsmittel zu der Brennkammer (6) zu führen und einen Injektionskanal des Brennstoffs (101b) koaxial zum Injektionskanal des Verbrennungsmittels umfasst, wobei der Injektionskanal des Brennstoffs mit dem Torus zur Versorgung mit Brennstoff (103) über Öffnung(en) (101bb) kommuniziert, die erlauben, den Brennstoff zu der Brennkammer (6) zu führen.

8. Raketenmotor, umfassend ein Antriebssystem nach einem der vorangehenden Ansprüche.

## Claims

1. A propulsion system for a rocket comprising: an oxidizer supply system (2); a fuel supply system (3), a combustion chamber (6); a plurality of injectors (101); an ignition system (40);
the injectors (101) and the ignition system (40) being in communication with the oxidizer supply system and the fuel supply system and opening into the combustion chamber (6), the injectors (101) being configured to convey oxidizer and fuel toward the combustion chamber (6) during an injection phase;
the propulsion system being **characterized in that** the ignition system (40) is configured to convey hot gases toward the combustion chamber (6) during an ignition phase and to convey oxidizer and fuel toward the combustion chamber (6) during the injection phase so that the flow rate of oxidizer and fuel coming from the ignition system (40) is homogeneous with that coming from the injectors (101).

2. The propulsion system according to claim 1, further comprising an injection head (5) on top of the combustion chamber (6); the injection head (5) being in communication with the oxidizer supply system and the fuel supply system, the ignition system (40) being entirely integrated to the injection head (5).

3. The propulsion system according to claim 2, wherein the ignition system (40) and the injection head (5) are formed integrally in one-piece, typically obtained by additive manufacturing.

4. The propulsion system according to any of the preceding claims, wherein the ignition system comprises:
an ignition main channel (108) in communication with the oxidizer supply system and the fuel supply system;
an ignition secondary channel (109) surrounding the ignition main channel (108) and in communication with the oxidizer supply torus (102) via orifice(s) (11a) for conveying oxidizer toward the combustion chamber;
an ignition tertiary channel (110) surrounding the ignition secondary channel (109) and in communication with the oxidizer supply torus (103) via orifice(s) (11b) for conveying fuel toward the combustion chamber (6).

5. The propulsion system according to any of the preceding claims, wherein the ignition system is configured to sweep hot gases with the oxidizer during the injection phase.

6. The propulsion system according to any of the preceding claims, wherein the oxidizer (2) and fuel (3) supply systems comprise first oxidizer and fuel supply valves (IVH, IVO), the first supply valves enabling control of the supply of the ignition system (40) with oxidizer and fuel and the second supply valves enabling control of the supply of the ignition system (40) and of the injection head (5) with oxidizer and fuel.

7. The propulsion system according to claim 1, wherein the injection head (5) comprises injectors (101), an oxidizer supply torus (102) and a fuel supply torus (103), each injector comprising an oxidizer injection channel (101a) opening onto the combustion chamber (6) from the oxidizer supply torus (102) for conveying oxidizer toward the combustion chamber (6) and a fuel injection channel (101b) coaxial with the oxidizer injection channel, the fuel injection channel communicating with the fuel supply torus (103) via orifice(s) (101bb) allowing conveying the fuel toward the combustion chamber (6).

8. A rocket engine comprising a propulsion system according to any of the preceding claims.
